# EUROPÄISCHE PATENTSCHRIFT

(11) **EP 3 833 568 B1**
(45) Veröffentlichungstag und Bekanntmachung des Hinweises auf die Patenterteilung: **29.06.2022**
(21) Anmeldenummer: 19753019.9
(22) Anmeldetag: 08.08.2019
(51) Int. Cl.: B60N 2/58, B60N 2/803, B60N 2/879, B60N 2/26, B60N 2/28, B60R 22/00

(54) **GURTFÜHRUNG EINES KINDERSITZES MITTELS EINES ALS ABLAGETASCHE AUSGEBILDETEN ELASTISCHEN BANDES AN EINER KOPFSTÜTZE EINES FAHRZEUGSITZES**
BELT GUIDE OF A CHILD'S SEAT BY MEANS OF AN ELASTIC BAND FORMED AS A STORAGE BAG ON A HEADREST OF A VEHICLE SEAT
GUIDE DE CEINTURE D'UN SIÈGE D'ENFANT AU MOYEN D'UNE BANDE ÉLASTIQUE FORMÉE COMME UN SAC DE RANGEMENT SUR UN APPUI-TÊTE D'UN SIÈGE DE VÉHICULE

(30) Priorität: 09.08.2018 DE 102018213403
(43) Veröffentlichungstag der Anmeldung: 16.06.2021
(73) Patentinhaber: Volkswagen Aktiengesellschaft, 38440 Wolfsburg (DE)
(72) Erfinder: PACHONICK, Alexander, 38126 Braunschweig (DE)
(86) Internationale Anmeldenummer: PCT/EP2019/071278
(87) Internationale Veröffentlichungsnummer: WO 2020/030723

(56) Entgegenhaltungen:
- EP-A1- 3 118 055
- DE-A1- 4 023 641

## Beschreibung

Die Erfindung betrifft eine Gurtführung eines Kindersitzes an einer Kopfstütze eines Fahrzeugsitzes.

Aus der Druckschrift EP 3 118 055 A1 ist eine Kopfstütze für einen Fahrzeugsitz mit einem Kopfstützenkörper und einem den Kopfstützenkörper zumindest teilweise umgebenden Kopfstützenbezug bekannt. An zwei voneinander beabstandeten Positionen des Kopfstützenkörpers und/oder des Kopfstützenbezugs ist ein streifenförmiges, in einer im Wesentlichen horizontalen Richtung verlaufendes elastisches Band angebracht, wobei das elastische Band zumindest an einem Abschnitt seines oberen Endes nicht mit dem Kopfstützenkörper und/oder dem Kopfstützenbezug verbunden ist, so dass eine Öffnung zwischen dem elastischen Band und dem Kopfstützenkörper und/oder dem Kopfstützenbezug erzeugt wird. In die Öffnung kann ein Gegenstand eingeschoben werden.

Die Druckschriften DE 10 2011 112 601 A1; DE 10 2004 049 321 A1 und DE 10 2017 005 322 A1 sowie DE 40 23 641 A1 offenbaren verschiedene Befestigungsmöglichkeiten von Kindersitzen.

Allgemein bekannt ist die Isofix-Verbindung von Kindersitzen. Sie besteht fahrzeugseitig aus zwei Haltebügeln, die sich in einem Abstand im Spalt zwischen Lehnen- und Sitzfläche befinden. Der Kindersitz wird in diese Befestigungen verhakt. Zumeist sind starre Befestigungsbügel, so genannte Rastarme, am Kindersitz angeordnet, die über eine Klickfunktion in karosseriefeste Haltebügel greifen. Es existieren aber auch weniger starre Systeme, bei denen der Kindersitz mit Hilfe von gespannten Gurtbändern mit den karosseriefesten Haltebügeln verbunden ist. Zusätzlich zur Befestigung an den Haltebügeln muss systemunabhängig eine zweite Fixierung erfolgen, um eine ungewünschte Rotation des Sitzes um die Haltebügel zu verhindern. Hierfür gibt es verschiedene Systeme, wobei ein weitverbreitetes System die so genannte Top-Tether-Anbindung über einen oberen Haltegurt ist. Dabei handelt es sich um ein zusätzliches Gurtband, das über die Sitzlehne geführt wird und mit einem Haken an einem Bügel am Fahrzeug befestigt und danach gespannt wird.

Umfasst die Sitzlehne eine Kopfstütze mit zwei Kopfstützenstangen, wird der obere Haltegurt bevorzugt durch die beiden Kopfstützenstangen geführt und ist dadurch automatisch in Abhängigkeit des Abstandes der Kopfstützenstangen zueinander gegen eine seitliche Verlagerung gesichert.

Anders verhält es sich bei Fahrzeugsitzen mit integrierten Kopfstützen, bei denen keine Kopfstützenstangen zur Verfügung stehen. Der obere Haltegurt wird bei Fahrzeugsitzen mit integrierter Kopfstütze mittig über die integrierte Kopfstütze geführt. Dabei entsteht die Problematik der seitlichen Führung des oberen Haltegurtes, die darin besteht, dass bei Anordnung eines Kindersitzes auf dem Fahrzeugsitz mit integrierter Kopfstütze ein seitlicher Halt beziehungsweise eine seitliche Führung des oberen Haltegurtes an der integrierten Kopfstütze schwierig zu gewährleisten ist.

Der Erfindung liegt nun die Aufgabe zugrunde, eine Positionierung des oberen Haltegurtes eines Kindersitzes auf andere möglichst einfache Weise zu gewährleisten.

Ausgangspunkt der Erfindung ist eine Kopfstütze für einen Fahrzeugsitz mit einem Kopfstützenkörper und einem den Kopfstützenkörper zumindest teilweise umgebenden Kopfstützenbezug, an der an zwei voneinander beabstandeten Positionen des Kopfstützenbezuges ein streifenförmiges, in einer im Wesentlichen horizontalen Richtung verlaufendes elastisches Band angebracht ist, wobei das elastische Band zumindest an seinen seitlichen Enden mit dem Kopfstützenbezug verbunden ist, wodurch eine obere Öffnung und eine gegenüberliegende untere Öffnung jeweils zwischen dem elastischen Band und dem Kopfstützenbezug der Kopfstütze ausgebildet sind.

Erfindungsgemäß ist vorgesehen, dass das elastische Band mehrlagig als mindestens eine Tasche ausgebildet ist.

Bevorzugt ist vorgesehen, dass die Kopfstütze eine in die Struktur der Sitzlehne integrierte oder eine nichtintegrierte Kopfstütze ist, die mit der Struktur der Sitzlehne über Haltestangen verbunden ist.

Die mehrlagige Tasche an der jeweiligen Kopfstütze weist bevorzugte Merkmale auf.

Bevorzugt ist, dass die mindestens eine mehrlagige Tasche am unteren Ende einen geschlossenen Rand zwischen zwei Lagen bildet, die durch Falten einer einlagigen Schnittmusterlage eines elastischen Materials gebildet sind, so dass die mindestens eine mehrlagige Tasche mindestens zweilagig ist.

Bevorzugt ist weiter, dass eine zweite Lage der aus zwei Lagen gebildeten mindestens einen mehrlagigen Lage am oberen Rand der zweiten Lage durch Falten des oberen Bereiches in entgegengesetzter Richtung zur Rückseite der Sitzlehne umgeschlagen ist, so dass im oberen Bereich der zweiten Lage als dritte Lage ein umgeschlagenes Band ausgebildet ist.

Erfindungsgemäß ist bevorzugt ferner vorgesehen, dass die seitlichen Enden des mehrlagigen elastischen Bandes mit dem Kopfstützenbezug über seitliche Vertikalnähte vernäht sind.

Dabei ist in einer eine Basis-Ausführungsvariante erweiternden Ausführungsvariante vorgesehen, dass das mehrlagige als mindestens eine Tasche ausgebildete elastische Band mit dem Kopfstützenbezug über weitere Vertikalnähte vernäht ist, so dass die obere Öffnung und die gegenüberliegende untere Öffnung, die durch die in der Basis-Ausführungsvariante ausschließlich seitlich angeordneten Vertikalnähten mit dem Kopfstützenbezug mit einer (Basis-)Öffnungsbreite vernäht sind, gegenüber der oberen Öffnung und der gegenüberliegenden unteren Öffnung eine gegenüber der (Basis-)Öffnungsbreite geringere Öffnungsbreite aufweisen, wobei gleichzeitig die mehreren Taschen des elastischen Bandes ausgebildet sind.

In einer noch weiteren Ausführungsvariante ist bevorzugt vorgesehen, dass die seitlichen vertikalen Nähte und die weiteren vertikalen Nähte durch obere und/oder untere horizontale Nähte miteinander verbunden sind.

Die Erfindung betrifft zudem eine Anordnung eines Gurtbandes eines auf einem Fahrzeugsitz angeordneten Kindersitzes, das von dem Kindersitz ausgehend über eine an einer Sitzlehne angeordneten Kopfstütze des Fahrzeugsitzes von einer Vorderseite der Sitzlehne des Fahrzeugsitzes auf eine Rückseite der Sitzlehne geführt und strukturseitig befestigt ist, wobei erfindungsgemäß vorgesehen ist, dass das Gurtband durch die obere Öffnung und die gegenüberliegende untere Öffnung jeweils zwischen dem mehrlagig als mindestens eine Tasche ausgebildeten elastischen Band und dem Kopfstützenbezug der Kopfstütze geführt ist, wobei das elastische Band an zwei voneinander beabstandeten Positionen des Kopfstützenbezuges in einer im Wesentlichen horizontalen Richtung zumindest an seinen seitlichen Ende mit dem Kopfstützenbezug verbunden ist.

Vorgesehen ist bevorzugt, dass das elastische Band mehrlagig als mindestens eine Tasche ausgebildet ist, deren Merkmale bereits erläutert sind und in der nachfolgenden Beschreibung noch detaillierter beschrieben werden.

Die Anordnung zeichnet sich in der Basis-Ausführungsvariante insbesondere dadurch aus, dass die obere Öffnung und die gegenüberliegende untere Öffnung eine Öffnungsbreite aufweisen, die der Breite des elastischen Bandes oder des als mindestens eine mehrlagige Tasche ausgebildeten elastischen Bandes entspricht, so dass eine Breite des Gurtbandes kleiner ist als die Öffnungsbreite der mindestens einen mehrlagigen Tasche, wobei die seitlichen Enden des mehrlagigen elastischen Bandes mit dem Kopfstützenbezug über seitliche Vertikalnähte vernäht sind.

In einer erweiterten Basis-Ausführungsvariante zeichnet sich die weitere Ausführungsvariante dadurch aus, dass die obere Öffnung und die gegenüberliegende untere Öffnung eine Öffnungsbreite aufweisen, die der Breite des Gurtbandes entspricht, wobei das mehrlagige elastische Band oder das als mindestens eine Tasche ausgebildete elastische Band mit dem Kopfstützenbezug über weitere Vertikalnähte vernäht ist, so dass die obere Öffnung und die gegenüberliegende untere Öffnung, die durch die ausschließlich seitlich angeordneten Vertikalnähten mit dem mit dem Kopfstützenbezug mit einer Öffnungsbreite vernäht sind, gegenüber der oberen Öffnung und der gegenüberliegenden unteren Öffnung jetzt eine geringere Öffnungsbreite aufweisen, wobei das als mindestens eine Tasche ausgebildete elastische Band durch die weiteren Vertikalnähte die mehreren Taschen ausbildet.

Die Erfindung wird nachfolgend anhand der zugehörigen Zeichnungen erläutert. Es zeigen:
- Figur 1: einen Fahrzeugsitz mit einer integrierten Kopfstütze;
- Figur 2: die Kopfstütze von ihrer Rückseite mit einer Ablagetasche in einer ersten Basis-Ausführungsvariante;
- Figur 3: die Kopfstütze von ihrer Rückseite mit einem Gurtband und einer Ablagetasche, wobei in Figur 3 neben der Basis-Ausführungsvariante mehrere weitere Ausführungsvarianten der Ablagetasche gezeigt sind;
- Figur 4: die Kopfstütze in einer Seitenansicht mit dem Gurtband und der Ablagetasche in der Seitenansicht;
- Figuren 5A, 5B: die Kopfstütze in der Rückansicht (Figur 5A) und der Seitenansicht (Figur 5B) gemäß Figur 2 ausschließlich mit der Ablagetasche und
- Figuren 6A, 6B: schematische Ansicht der Kopfstütze in der Seitenansicht ausschließlich mit der Ablagetasche, vergrößert in Figur 6B.

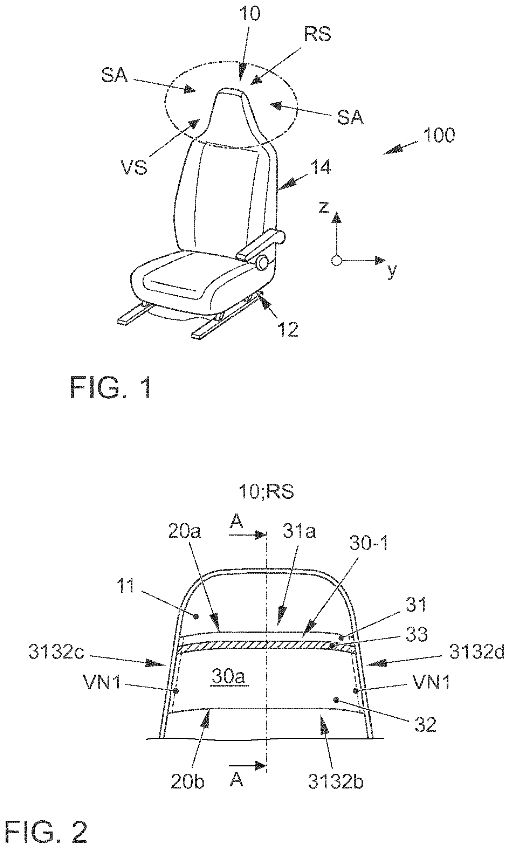

Figur 1 zeigt einen Fahrzeugsitz 100, der ein Sitzteil 12 und eine Sitzlehne 14 sowie eine integrierte Kopfstütze 10 aufweist. Als integrierte Kopfstütze 10 wird eine Kopfstütze 10 angesehen, die einteilig mit der Sitzlehne 14 verbunden ist. Sie unterscheiden sich von nichtintegrierten Kopfstützen (nicht dargestellt), die über Verbindungsstangen mit der Sitzlehne 14 verbunden sind, wobei die Kopfstütze dann ein von der Sitzlehne 14 zumeist höhenverstellbares unabhängiges Bauteil darstellt.

Der nachfolgend erläuterte Gegenstand der Erfindung eignet sich für integrierte Kopfstützen 10 und nichtintegrierte Kopfstützen, wie nachfolgend deutlich wird.

In Figur 1 ist eine Vorderseite VS, eine Rückseite RS und Seitenansichten SA der Kopfstütze 10 definiert. Ferner ist eine horizontale Richtung y (y-Richtung) und eine vertikale Richtung (z-Richtung) definiert.

Figur 2 zeigt die Rückseite RS der Kopfstütze 10 gemäß Figur 1. Dabei weist die Kopfstütze 10 einen nicht näher dargestellten Kopfstützenkörper und einen Kopfstützenbezug 11 auf, der den Kopfstützenkörper umgibt. Für den Kopfstützenbezug 11 kommen beliebige Materialien zum Einsatz.

Des Weiteren weist die Kopfstütze 10 ein elastisches Band 30 auf, das streifenförmig ausgeführt ist und in einer im Wesentlichen horizontalen Richtung y von einer Seite der Kopfstütze 10 zu der gegenüberliegenden Seite derselben verläuft.

Das elastische Band 30 ist an zwei voneinander beanstandeten Positionen des Kopfstützenkörpers am Kopfstützenbezug 11 angebracht.

Das elastische Band 30 weist ein oberes Ende 31a und in z-Richtung gegenüberliegend ein unteres Ende 3132b und in y-Richtung gegenüberliegende seitliche Enden 3132c, 3132d auf, die auch als Ränder bezeichnet werden können.

In einer in Figur 2 dargestellten Basis-Ausführungsvariante ist das elastische Band 30 lediglich an seinen seitlichen Enden 3132c, 3132d mit dem Kopfstützenbezug 11 verbunden, insbesondere vernäht, so dass an dem oberen Ende 31a und an dem unteren Ende 3132b durch entsprechendes Wegziehen des elastischen Bands 30 sich in z-Richtung gegenüberliegende Öffnungen 20a, 20b zwischen dem elastischen Band 30 und dem Kopfstützenbezug 11 der Kopfstütze 10 vergrößerbar sind.

Die Verbindung zwischen den seitlichen Enden 3132c, 3132d des elastischen Bandes 30 mit dem Kopfstützenbezug 11 erfolgt über die Nähte VN1, die wegen ihrer im Ausführungsbeispiel vertikalen Ausrichtung als seitliche Vertikalnähte VN1 bezeichnet werden.

Eine Besonderheit der Erfindung besteht darin, dass die seitlichen Vertikalnähte VN1 ein mehrlagiges elastisches Band 30 mit dem Kopfstützenbezug 11 verbinden, wie nachfolgend erläutert wird.

Die mehreren Lagen 31, 32, 33 des elastischen Bandes 30 werden durch Zusammenfalten einer einlagigen Schnittmusterlage des elastischen Bandes 30 gebildet, wobei die Schnittmusterlage die Kontur und Form der Rückseite RS der Sitzlehne 14 dahingehend berücksichtigt, dass nach einem Zusammenfalten der Schnittmusterlage das mehrlagige elastische Band 30 passgenau an den seitlichen Enden 3132c, 3132d des elastischen Bandes 30 an den seitlichen voneinander beanstandeten Positionen des Kopfstützenkörpers am Kopfstützenbezug 11 angebracht, insbesondere vernäht, werden kann.

Die Schnittmusterlage wird dabei erfindungsgemäß im Ausführungsbeispiel - in der Mitte in vertikaler z-Richtung gesehen - einmal gefaltet, so dass sich am unteren Ende 3132b ein geschlossener Rand bildet, der aus den Lagen 31 und 32 gebildet wird.

Nachfolgend wird die Lage 32 im oberen Bereich gefaltet, mit anderen Worten in entgegengesetzter Richtung zur Rückseite RS der Sitzlehne 14 umgeschlagen, so dass die bisher zur ersten Lage 31 gerichtete Seite der zweiten Lage 32 zu einer Sichtseite wird, die der Betrachter als umgeschlagenes Band visuell wahrnimmt.

Diese als umgeschlagene Bandkante bezeichnete dritte Lage 33 hat den Vorteil, dass der Betrachter ohne Weiteres erkennt, dass zwischen der ersten Lage 31 und der zweiten Lage 32 eine Öffnung in Form einer Tasche 30a gebildet ist.

Insofern ist das elastische Band 30 jetzt erfindungsgemäß als Tasche 30a ausgebildet, welche in der Basis-Ausführungsvariante zwischen den seitlichen Enden 3132c, 3132d über die vertikalen Nähte VN1 mit dem Kopfstützenbezug 11 verbunden ist, die am unteren Ende 3132b einen geschlossenen Rand und zwischen der ersten Lage 31 und der zweiten Lage 32 eine Taschenöffnung 30-1 bildet, die in horizontaler Richtung über die gesamte Breite des mehrlagig angeordneten elastischen Bandes 30 ausgebildet ist.

Es versteht sich, dass eine vertikale Naht VN1 von oben nach unten in z-Richtung gesehen zunächst eine Einfachnaht zwischen Kopfstützenbezug 11 und erster Lage 31 ist. Anschließend wird eine Dreifachnaht im Bereich der umgeschlagenen Bandkante 33 durch die Lagen 33, 32, 31 und den Kopfstützenbezug 11 ausgeführt, wonach eine Zweifachnaht unterhalb der umgeschlagenen Bandkante 33 bis zum unteren Ende 3132b der Tasche 30a ausgebildet wird, um die Lagen 31 und 32 mit dem Kopfstützenbezug 11 zu vernähen.

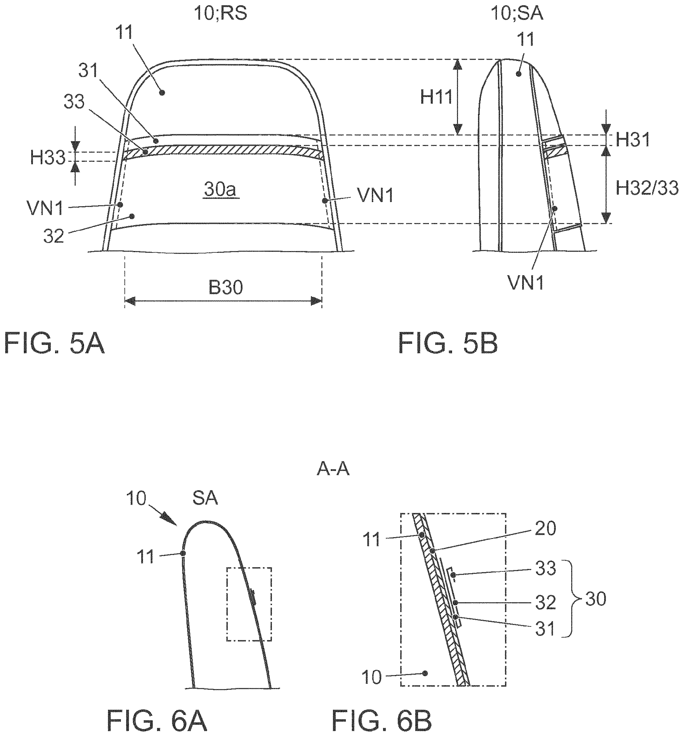

Die Figur 2 zeigt die Schnittlinie A-A, wobei der zugehörige Schnitt A-A in den Figuren 6A und 6B dargestellt ist.

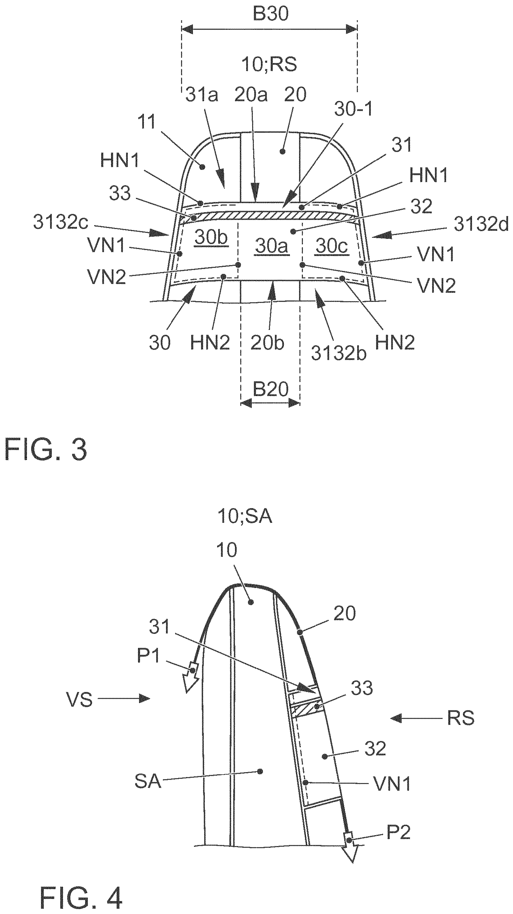

Die Figur 3 zeigt eine vorteilhafte Verwendung des bevorzugt als mindestens eine Tasche 30a, 30b, 30c ausgebildeten elastischen Bandes 30, wobei verschiedene Ausführungsvarianten des als mindestens eine Tasche 30a, 30b, 30c ausgebildeten elastischen Bandes 30 verdeutlicht und nachfolgend beschrieben werden, die insbesondere in einem engen Zusammenhang mit einem Gurtband 20 stehen.

Wie bereits erläutert besteht bei integrierten Kopfstützen 10, bei denen keine Kopfstützenstangen zur Verfügung stehen, ein Problem darin, dass der obere Haltegurt eines Kindersitzes, der mittig über die integrierte Kopfstütze geführt ist, keine seitliche Führung aufweist.

Dieses Problem tritt auch bei Kopfstützen 10 auf, bei denen Kopfstützenstangen angeordnet sind, wenn die Kopfstütze beispielsweise entnommen wurde und ein Kindersitz angeordnet ist.

Insofern betrifft der nachfolgende Gegenstand der Erfindung beide Arten von Kopfstützen, sowohl integrierte Kopfstützen als auch nicht integrierte Kopfstützen.

In Figur 3 ist ein oberer Haltegurt eines Kindersitzes mit dem Bezugszeichen 20 auf der Rückseite RS dargestellt, der nachfolgend allgemein als Gurtband 20 bezeichnet wird.

In Zusammenschau der Figuren 3 und 4 wird deutlich, dass das Gurtband 20 gemäß dem Pfeil P1 in vertikaler Richtung (z-Richtung) eines nicht näher dargestellten Kindersitzes auf der Vorderseite VS der Sitzlehne 14 verläuft. Dort ist das Gurtband 20 am Kindersitz befestigt.

Das Gurtband 20 ist über die Kopfstütze 10 geführt und läuft auf der Rückseite RS der Sitzlehne in vertikaler Richtung z-Richtung entlang gemäß dem Pfeil P2 zu einer nicht dargestellten strukturseitigen Befestigung, vorzugsweise am Fahrzeugsitz 100.

Das Gurtband 20 weist eine Öffnungsbreite B20 (vergleiche Figur 3) auf. Gemäß der bereits erläuterten Basis-Ausführungsvariante gemäß Figur 2 wird das vom Kindersitz kommende Gurtband 20 durch entsprechendes Wegziehen des elastischen Bands 30, von der Rückseite RS der Sitzlehne weg, durch die sich in z-Richtung gegenüberliegenden Öffnungen 20a, 20b für das Gurtband 20 geführt und strukturseitig befestigt.

In der Basis-Ausführungsvariante entspricht die Öffnungsbreite der Öffnungen 20a, 20b der Breite B30 (vergleiche Figur 3) des elastischen Bandes 30 im Bereich des oberen Endes 31a des elastischen Bandes 30.

Es wird deutlich, dass das Gurtband 20 in der Basis-Ausführungsvariante gegen seitliches Abrutschen gesichert ist, da die vertikalen Nähte VN1 ein Abrutschen von der Kopfstütze 10 verhindern.

Insofern erfüllt das elastische Band 30 eine Sicherungsfunktion und bildet somit das Sicherungselement für das Gurtband 20 im Falle eines etwaigen Abrutschens und bei Ausgestaltung als eine Tasche 30a erfüllt das elastische Band 30 zudem eine Komfortfunktion, da in der Tasche 30a Gegenstände anordbar sind, die in vorteilhafter Weise nicht herausfallen können, da die Tasche 30a einen geschlossenen Bereich aufweist, der am unteren Ende 3132b als geschlossener Rand ausgebildet ist, der aus den Lagen 31 und 32 (vergleiche Figur 2) gebildet wird. Hierin besteht ein wesentlicher Vorteil gegenüber der in der Druckschrift EP 3 118 055 A1 vorgestellten Lösung des einlagigen oben und unten offenen Gurtbandes.

Ausgehend von der Basis-Ausführungsvariante kann das elastische Band 30 in einer weiteren Ausführungsvariante als Sicherungs- und Führungselement dienen, wenn gemäß der Darstellung gemäß Figur 3 weitere vertikale Nähte VN2 (Führungsnähte) analog zu den vertikalen Nähten VN1 (Befestigungsnähte) am Kopfstützenbezug 11 angeordnet werden, wobei die vertikale Nähte VN2 in einem Abstand eingebracht werden, welcher der Öffnungsbreite B20 des Gurtbandes 20 entspricht, so dass das Gurtband 20 passgenau durch die Öffnungen 20a, 20b geführt werden kann, die in dieser Ausführungsvariante die geringere Öffnungsbreite B20 aufweisen.

Dabei verlaufen die vertikalen Nähte VN2 bevorzugt nicht bis zum oberen Ende 31a des elastischen Bandes 30, sondern nur zum Rand der Taschenöffnung 30-1. Das Gurtband 20 ist bei dieser Ausführungsvariante zusätzlich in dem elastischen Band 30 geführt und in dem elastischen Band 30 entstehen ferner in Abhängigkeit der Öffnungsbreite B20 des Gurtbandes 20 gegenüber der Basis-Ausführungsvariante drei kleinere Taschen 30a, 30b, 30c, die ebenfalls komfortabel sind.

Es versteht sich, dass dann auch mehrere obere und untere Öffnungen gebildet werden, jedoch sind die mittleren zentralen Öffnungen 20a, 20b gemäß Figur 3 im Bereich der Tasche 30a zur Führung des Gurtbandes 20 vorgesehen.

In weiteren Ausführungsvariante können die vertikalen Nähte VN1 und VN2 durch obere und/oder untere horizontale Nähte HN1, HN2 (vergleiche Figur 3) miteinander verbunden werden, so dass die Befestigung des elastischen Bandes 30, mithin der Taschen 30a, 30b, 30c, am Kopfstützenbezug 11 in vorteilhafter Weise noch sicherer ist.

Die oberen horizontalen Nähte HN1 sind als Einfachnähte und die unteren horizontalen Nähte HN2 sind als Doppelnähte ausgeführt. In diesem Fall sind die obere und untere Öffnungen im Bereich der Taschen 30b und 30c geschlossen, so dass dem Anwender in vorteilhafter Weise auch nur ein Öffnungspaar 20a, 20b (vergleiche Figur 3) zur Durchführung des Gurtbandes 20 zur Verfügung steht. Anwendungsfehler sind somit ausgeschlossen, wobei eine exakte Führung und eindeutige Führung des Gurtbandes 20 hinter der dann mittleren Tasche 30a bewirkt wird.

Die Figuren 5A, 5B zeigen ergänzend in der Rückansicht (Figur 5A) und der Seitenansicht (Figur 5B) die Kopfstütze 10 gemäß Figur 2 in der Basis-Ausführungsvariante ausschließlich mit dem als eine Ablagetasche 30a ausgebildeten elastischen Band 30.

Der von der ersten Lage 31 sichtbare Rand weist die Höhe H31 auf. Die umgeschlagene Bandkante 33 als dritte Lage 33 weist die Höhe H33 auf. Die zweite Lage 32 und die dritte Lage 33 gemeinsam weisen die Höhe H3233 auf. Die Höhe H11 zwischen Oberseite und oberem Ende 31a des elastischen Bandes 30 ist ebenfalls angetragen. Es ist vorgesehen, dass die Höhen H11 im Wesentlichen der Höhe H32, H33 entsprechen. Die Höhe H31 des sichtbaren Randes der ersten Lage 31 entspricht im Wesentlichen der Höhe H33 der umgeschlagenen Bandkante 33 als dritte Lage 33. In einer bevorzugten Ausgestaltung beträgt H11 = 60 mm, H31 = 10 mm, H33 = 10 mm und H3233 = 75 mm.

In den Figuren 6A und 6B ist in schematischen Ansichten (Figur 6A vergrößert in Figur 6B) der Kopfstütze 10 in der Seitenansicht SA der Kopfstützenbezug 11, das Gurtband 20 und die drei Lagen 31, 32, 33 der mindestens einen Ablagetasche 30a als Schnitt A-A entlang der Schnittlinie in Figur 2 dargestellt.

Der mehrlagige Aufbau wird deutlich: eine Lage des Materials des Kopfstützenbezuges 11, darauf die Lage des Gurtbandes 20 und die drei Lagen 31, 32, 33 des als mindestens eine Tasche 30a oder als Taschen 30a, 30b, 30c ausgebildeten elastischen Bandes 30.

Das Gurtband 20 ist gegenüber dem Material des Kopfstützenbezuges 11 circa nur 1 mm beabstandet und die erste Lage 31 des elastisches Bandes 30 ist gegenüber dem Gurtband 20 ebenfalls nur 1 mm beabstandet, das heißt, ein einlagiges elastisches Band 30 baut gegenüber der Rückseite RS der Sitzlehne 14 ebenfalls nur gering auf.

Ist das elastische Band 30 als mindestens eine Tasche 30a (Taschen 30a, 30b, 30c) ausgebildet, beträgt der Abstand im Bereich der umgeschlagenen Bandkante 33 der Tasche 30 von dem Material des Kopfstützenbezuges 11 im Nichtgebrauch der Tasche 30 somit maximal 4 mm, wenn insgesamt die drei Lagen 31, 32, 33 der dreilagigen Tasche 30 Taschen 30a, 30b, 30c und die Lage des Gurtbandes 20 berücksichtigt werden.

### Bezugszeichenliste

- 100: Fahrzeugsitz
- 10: Kopfstütze

- VS: Vorderseite
- RS: Rückseite
- SA: Seitenansicht

- 12: Sitzteil
- 14: Sitzlehne
- 20: Gurtband
- 30: elastisches Band
- 31: erste Lage
- 32: zweite Lage
- 33: dritte Lage (umgenähte Lage)

- 31a: oberes Ende
- 3132b: unteres Ende

- VN1: erste Vertikalnähte
- VN2: zweite Vertikalnähte

- HN1: erste Horizontalnähte
- HN2: zweite Horizontalnähte

- 3132c: seitliches Ende
- 3132d: seitliches Ende

- 30-1: Taschenöffnung
- 20a: obere Gurtbandöffnung
- 20b: untere Gurtbandöffnung
- P1: Pfeilrichtung zum Kindersitz
- P2: Pfeilrichtung zur hinteren Befestigung des Gurtbandes 20 strukturseitig

- H11: Höhe Bezugsstoff der Kopfstütze 10 oberhalb dem elastischen Band 30
- H31: Höhe sichtbarer Rand der ersten Lage 31
- H3233: Höhe zweite Lage 32 und dritte Lage 33
- H33: Höhe dritte Lage 33

- B20: Breite des Gurtbandes 20
- B30: Breite des elastischen Bandes 30

- z: vertikale Richtung

- 11: Kopfstützenbezug

- y: horizontale Richtung

- 30a, 30b, 30c: Taschen

## Patentansprüche

1. Kopfstütze (10) für einen Fahrzeugsitz (100) mit einem Kopfstützenkörper und einem den Kopfstützenkörper zumindest teilweise umgebenden Kopfstützenbezug (11), an der an zwei voneinander beabstandeten Positionen des Kopfstützenbezuges (11) ein streifenförmiges, in einer im Wesentlichen horizontalen Richtung (y) verlaufendes elastisches Band (30) angebracht ist, wobei das elastische Band (30) zumindest an seinen seitlichen Enden (3132c, 3132d) mit dem Kopfstützenbezug (11) verbunden ist, wodurch eine obere Öffnung (20a) und eine gegenüberliegende untere Öffnung (20b) jeweils zwischen dem elastischen Band (30) und dem Kopfstützenbezug (11) der Kopfstütze (10) ausgebildet sind, **dadurch gekennzeichnet, dass** das elastische Band (30) mehrlagig als mindestens eine Tasche (30a, 30b, 30c) ausgebildet ist.

2. Kopfstütze nach Anspruch 1, **dadurch gekennzeichnet, dass** die Kopfstütze (10) eine in die Struktur der Sitzlehne (14) integrierte oder eine nichtintegrierte Kopfstütze (10) ist, die mit der Struktur der Sitzlehne (14) über Haltestangen verbunden ist.

3. Kopfstütze (10) nach Anspruch 1, **dadurch gekennzeichnet, dass** die mindestens eine mehrlagige Tasche (30a, 30b, 30c) am unteren Ende (3132b) einen geschlossenen Rand zwischen zwei Lagen (31, 32) bildet, die durch Falten einer einlagigen Schnittmusterlage eines elastischen Materials gebildet sind, so dass die mindestens eine mehrlagige Tasche (30a, 30b, 30c) mindestens zweilagig ist.

4. Kopfstütze (10) nach Anspruch 3, **dadurch gekennzeichnet, dass** eine zweite Lage (32) der aus zwei Lagen (31, 32) gebildeten mindestens einen mehrlagigen Tasche (30a, 30b, 30c) am oberen Rand der zweiten Lage (32) durch Falten des oberen Bereiches in entgegengesetzter Richtung zur Rückseite (RS) der Sitzlehne (14) umgeschlagen ist, so dass im oberen Bereich der zweiten Lage (32) als dritte Lage (33) ein umgeschlagenes Band ausgebildet ist.

5. Kopfstütze (10) nach mindestens einem der vorhergehenden Ansprüche, **dadurch gekennzeichnet, dass** die seitlichen Enden (3132c, 3132d) des mehrlagigen elastischen Bandes (30) mit dem Kopfstützenbezug (11) über seitliche Vertikalnähte (VN1) vernäht sind.

6. Kopfstütze (10) nach mindestens einem der vorhergehenden Ansprüche, **dadurch gekennzeichnet, dass** das mehrlagige als mindestens eine Tasche (30a, 30b, 30c) ausgebildete elastische Band (30) mit dem Kopfstützenbezug (11) über weitere Vertikalnähte (VN2) vernäht ist, so dass die obere Öffnung (20a) und die gegenüberliegende untere Öffnung (20b), die durch die ausschließlich seitlich angeordneten Vertikalnähten (VN1) mit dem Kopfstützenbezug (11) mit einer Öffnungsbreite (B30) vernäht sind, gegenüber der oberen Öffnung (20a) und der gegenüberliegenden unteren Öffnung (20b) eine geringere Öffnungsbreite (B20) aufweisen, wobei gleichzeitig die mehreren Taschen (30a, 30b, 30c) des elastischen Bandes (30) ausgebildet sind.

7. Kopfstütze (10) nach Anspruch 5 und 6, **dadurch gekennzeichnet, dass** die seitlichen vertikalen Nähte und die weiteren vertikalen Nähte (VN1, VN2) durch obere und/oder untere horizontale Nähte (HN1, HN2) miteinander verbunden sind.

8. Anordnung eines Gurtbandes (20) eines auf einem Fahrzeugsitz (100) angeordneten Kindersitzes, das von dem Kindersitz ausgehend über eine an einer Sitzlehne (14) angeordnete Kopfstütze (10) des Fahrzeugsitzes (100) von einer Vorderseite (VS) der Sitzlehne (14) des Fahrzeugsitzes (100) auf eine Rückseite (RS) der Sitzlehne (14) geführt und strukturseitig befestigt ist, **dadurch gekennzeichnet, dass** das Gurtband (20) durch eine obere Öffnung (20a) und eine gegenüberliegende untere Öffnung (20b) jeweils zwischen einem mehrlagig als mindestens eine Tasche (30a, 30b, 30c) ausgebildeten elastischen Band (30) und dem Kopfstützenbezug (11) der Kopfstütze (10) geführt ist, wobei das elastische Band (30) an zwei voneinander beabstandeten Positionen des Kopfstützenbezuges (11) als ein streifenförmiges, in einer im Wesentlichen horizontalen Richtung (y) verlaufendes elastisches Band (30) ausgebildet und an dem Kopfstützenbezug (11) der Kopfstütze (10) angeordnet ist, wobei das elastische Band (30) zumindest an seinen seitlichen Enden (3132c, 3132d) mit dem Kopfstützenbezug (11) verbunden ist.

9. Anordnung nach Anspruch 8 , **dadurch gekennzeichnet, dass** die obere Öffnung (20a) und die gegenüberliegende untere Öffnung (20b) eine Öffnungsbreite (B30) aufweisen, die der Breite des elastischen Bandes (30) oder des als mindestens eine mehrlagige Tasche (30a, 30b, 30c) ausgebildeten elastischen Bandes (30) entspricht, so dass eine Breite (B20) des Gurtbandes (20) kleiner ist als die Öffnungsbreite (B30) der mindestens einen mehrlagigen Tasche (30a, 30b, 30c), wobei die seitlichen Enden (3132c, 3132d) des mehrlagigen elastischen Bandes (30) mit dem Kopfstützenbezug (11) über seitliche Vertikalnähte (VN1) vernäht sind.

10. Anordnung nach Anspruch 8 , **dadurch gekennzeichnet, dass** die obere Öffnung (20a) und die gegenüberliegende untere Öffnung (20b) eine Öffnungsbreite (B20) aufweisen, die im Wesentlichen der Breite (B20) des Gurtbandes (20) entspricht, wobei das mehrlagige elastische Band (30) oder das als mindestens eine Tasche (30a, 30b, 30c) ausgebildete elastische Band (30) mit dem Kopfstützenbezug (11) über weitere Vertikalnähte (VN2) vernäht ist, so dass die obere Öffnung (20a) und die gegenüberliegende untere Öffnung (20b), die durch die ausschließlich seitlich angeordneten Vertikalnähte (VN1) mit dem Kopfstützenbezug (11) mit einer Öffnungsbreite (B30) vernäht sind, gegenüber der oberen Öffnung (20a) und der gegenüberliegenden unteren Öffnung (20b) jetzt eine geringere Öffnungsbreite (B20) aufweisen, wobei das als mindestens eine Tasche (30a, 30b, 30c) ausgebildete elastische Band (30) durch die weiteren Vertikalnähte (VN2) die mehreren Taschen (30a, 30b, 30c) ausbildet.

## Claims

1. Headrest (10) for a vehicle seat (100) comprising a headrest body and a headrest cover (11) at least partially surrounding said headrest body, on which cover a strip-shaped elastic band (30) extending in a substantially horizontal direction (y) is attached at two positions of the headrest cover (11) that are spaced apart from one another, wherein the elastic band (30) is connected, at least at its lateral ends (3132c, 3132d), to the headrest cover (11), whereby an upper opening (20a) and an opposite lower opening (20b) are respectively formed between the elastic band (30) and the headrest cover (11) of the headrest (10), **characterized in that** the elastic band (30) is formed in multiple layers as at least one pocket (30a, 30b, 30c).

2. Headrest according to Claim 1, **characterized in that** the headrest (10) is a headrest integrated into the structure of the backrest (14), or is a non-integrated headrest (10) which is connected to the structure of the backrest (14) via retaining rods.

3. Headrest (10) according to Claim 1, **characterized in that** the at least one multi-layer pocket (30a, 30b, 30c) forms, at the lower end (3132b), a closed edge between two layers (31, 32), which are formed by folding a single-layer pattern ply of an elastic material so that the at least one multi-layer pocket (30a, 30b, 30c) has at least two layers.

4. Headrest (10) according to Claim 3, **characterized in that** a second layer (32) of the at least one multi-layer pocket (30a, 30b, 30c) formed from two layers (31, 32) is folded over at the upper edge of the second layer (32) by folding of the upper region in the direction opposite the rear side (RS) of the backrest (14), so that a folded-over band is formed as a third layer (33) in the upper region of the second layer (32).

5. Headrest (10) according to at least one of the preceding claims, **characterized in that** the lateral ends (3132c, 3132d) of the multi-layer elastic band (30) are sewn to the headrest cover (11) via lateral vertical seams (VN1).

6. Headrest (10) according to at least one of the preceding claims, **characterized in that** the multi-layer elastic band (30) formed as at least one pocket (30a, 30b, 30c) is sewn to the headrest cover (11) via further vertical seams (VN2), so that the upper opening (20a) and the opposite lower opening (20b)-which, via the exclusively laterally arranged vertical seams (VN1), are sewn to the headrest cover (11) having an opening width (B30)-have a smaller opening width (B20) than the upper opening (20a) and the opposite lower opening (20b), wherein the multiple pockets (30a, 30b, 30c) of the elastic band (30) are formed at the same time.

7. Headrest (10) according to Claim 5 and 6, **characterized in that** the lateral vertical seams and the further vertical seams (VN1, VN2) are connected to one another by upper and/or lower horizontal seams (H1N, HN2).

8. Arrangement of a belt strap (20) of a child seat arranged on a vehicle seat (100), which strap, starting from the child seat, is guided over a headrest (10) of the car seat (100) arranged on a backrest (14), from a front side (VS) of the backrest (14) of the vehicle seat (100) to a rear side (RS) of the backrest (14), and is attached on the structure side, **characterized in that** the belt strap (20) is guided through an upper opening (20a) and an opposite lower opening (20b), respectively between an elastic band (30) formed in multiple layers as at least one pocket (30a, 30b, 30c) and the headrest cover (11) of the headrest (10), wherein the elastic band (30) is formed, at two positions of the headrest cover (11) that are spaced apart from each other, as a strip-shaped elastic band (30) extending in a substantially horizontal direction (y), and is arranged on the headrest cover (11) of the headrest (10), wherein the elastic band (30) is connected, at least at its lateral ends (3132c, 3132d), to the headrest cover (11).

9. Arrangement according to Claim 8, **characterized in that** the upper opening (20a) and the opposite lower opening (20b) have an opening width (B30) that corresponds to the width of the elastic band (30), or of the elastic band (30) formed as at least one multi-layer pocket (30a, 30b, 30c), so that a width (B20) of the belt strap (20) is smaller than the opening width (B30) of the at least one multi-layer pocket (30a, 30b, 30c), wherein the lateral ends (3132c, 3132d) of the multi-layer elastic band (30) are sewn to the headrest cover (11) via lateral vertical seams (VN1).

10. Arrangement according to Claim 8, **characterized in that** the upper opening (20a) and the opposite lower opening (20b) have an opening width (B20) which substantially corresponds to the width (B20) of the belt strap (20), wherein the multi-sheet elastic band (30), or the elastic band (30) formed as at least one pocket (30a, 30b, 30c), are sewn to the headrest cover (11) via further vertical seams (VN2), so that the upper opening (20a) and the opposite lower opening (20b), which are sewn to the headrest cover (11) having an opening width (B30) via the exclusively laterally arranged vertical seams (VN1), now have a smaller opening width (B20) than the upper opening (20a) and the opposite lower opening (20b), wherein the elastic band (30) formed as at least one pocket (30a, 30b, 30c) forms the additional pockets (30a, 30b, 30c) via the further vertical seams (VN2).

## Revendications

1. Appui-tête (10) pour un siège de véhicule (100), comprenant un corps d'appui-tête et une housse d'appui-tête (11) entourant au moins en partie le corps d'appui-tête, sur laquelle est fixée, en deux positions espacées l'une de l'autre de la housse d'appui-tête (11), une bande élastique (30) en forme de ruban s'étendant dans une direction (y) sensiblement horizontale, la bande élastique (30) étant reliée au moins par ses extrémités latérales (3132c, 3132d) à la housse d'appui-tête (11), moyennant quoi une ouverture supérieure (20a) et une ouverture inférieure (20b) opposée sont réalisées respectivement entre la bande élastique (30) et la housse d'appui-tête (11) de l'appui-tête (10), **caractérisé en ce que** la bande élastique (30) est réalisée en plusieurs couches sous la forme d'au moins une poche (30a, 30b, 30c).

2. Appui-tête selon la revendication 1, **caractérisé en ce que** l'appui-tête (10) est un appui-tête (10) intégré dans la structure du dossier de siège (14) ou non intégré, qui est relié à la structure du dossier de siège (14) par le biais de barres de maintien.

3. Appui-tête (10) selon la revendication 1, **caractérisé en ce que** l'au moins une poche (30a, 30b, 30c) en plusieurs couches forme, à l'extrémité inférieure (3132b), un bord fermé entre deux couches (31, 32), qui sont formées par pliage d'une couche de patron à une couche d'un matériau élastique, de telle sorte que l'au moins une poche (30a, 30b, 30c) en plusieurs couches soit au moins à deux couches.

4. Appui-tête (10) selon la revendication 3, **caractérisé en ce qu'**une deuxième couche (32) de l'au moins une poche (30a, 30b, 30c) en plusieurs couches formée à partir de deux couches (31, 32) est rabattue sur le bord supérieur de la deuxième couche (32) par pliage de la zone supérieure dans la direction opposée à la face arrière (RS) du dossier de siège (14), de telle sorte qu'une bande rabattue soit formée comme troisième couche (33) dans la zone supérieure de la deuxième couche (32).

5. Appui-tête (10) selon au moins une des revendications précédentes, **caractérisé en ce que** les extrémités latérales (3132c, 3132d) de la bande élastique (30) en plusieurs couches sont cousues à la housse d'appui-tête (11) par le biais de coutures verticales latérales (VN1).

6. Appui-tête (10) selon au moins une des revendications précédentes, **caractérisé en ce que** la bande élastique (30) en plusieurs couches réalisée sous la forme d'au moins une poche (30a, 30b, 30c) est cousue à la housse d'appui-tête (11) par le biais d'autres coutures verticales (VN2), de telle sorte que l'ouverture supérieure (20a) et l'ouverture inférieure (20b) opposée, qui sont cousues à la housse d'appui-tête (11) par les coutures verticales (VN1) disposées uniquement sur les côtés avec une largeur d'ouverture (B30), présentent une largeur d'ouverture (B20) plus petite par rapport à l'ouverture supérieure (20a) et l'ouverture inférieure (20b) opposée, les plusieurs poches (30a, 30b, 30c) de la bande élastique (30) étant formées simultanément.

7. Appui-tête (10) selon les revendications 5 et 6, **caractérisé en ce que** les coutures verticales latérales et les autres coutures verticales (VN1, VN2) sont reliées entre elles par des coutures horizontales supérieures et/ou inférieures (HN1, HN2).

8. Agencement d'une sangle de ceinture (20) d'un siège d'enfant disposé sur un siège de véhicule (100), qui est guidée à partir du siège d'enfant d'une face avant (VS) du dossier de siège (14) du siège de véhicule (100) à une face arrière (RS) du dossier de siège (14) en passant par un appui-tête (10) disposé sur un dossier de siège (14) du siège de véhicule (100) et qui est fixée côté structure, **caractérisé en ce que** la sangle de ceinture (20) est guidée par une ouverture supérieure (20a) et une ouverture inférieure (20b) opposée respectivement entre une bande élastique (30) réalisée en plusieurs couches sous la forme d'au moins une poche (30a, 30b, 30c) et la housse d'appui-tête (11) de l'appui-tête (10), la bande élastique (30) étant réalisée, en deux positions espacées l'une de l'autre de la housse d'appui-tête (11), sous la forme d'une bande élastique (30) en forme de ruban s'étendant dans une direction (y) sensiblement horizontale et étant disposée sur la housse d'appui-tête (11) de l'appui-tête (10), la bande élastique (30) étant reliée, au moins par ses extrémités latérales (3132c, 3132d) à la housse d'appui-tête (11).

9. Agencement selon la revendication 8, **caractérisé en ce que** l'ouverture supérieure (20a) et l'ouverture inférieure (20b) opposée présentent une largeur d'ouverture (B30), qui correspond à la largeur de la bande élastique (30) ou de la bande élastique (30) réalisée sous la forme d'au moins une poche (30a, 30b, 30c) en plusieurs couches, de telle sorte qu'une largeur (B20) de la sangle de ceinture (20) soit inférieure à la largeur d'ouverture (B30) de l'au moins une poche (30a, 30b, 30c) en plusieurs couches, les extrémités latérales (3132c, 3132d) de la bande élastique (30) en plusieurs couches étant cousues à la housse d'appui-tête (11) par le biais de coutures verticales latérales (VN1).

10. Agencement selon la revendication 8, **caractérisé en ce que** l'ouverture supérieure (20a) et l'ouverture inférieure (20b) opposée présentent une largeur d'ouverture (B20), qui correspond sensiblement à la largeur (B20) de la sangle de ceinture (20), la bande élastique (30) en plusieurs couches ou la bande élastique (30) réalisée sous la forme d'au moins une poche (30a, 30b, 30c) étant cousue à la housse d'appui-tête (11) par le biais d'autres coutures verticales (VN2), de telle sorte que l'ouverture supérieure (20a) et l'ouverture inférieure (20b) opposée, qui sont cousues à la housse d'appui-tête (11) par les coutures verticales (VN1) disposées uniquement sur les côtés avec une largeur d'ouverture (B30), présentent à présent une largeur d'ouverture (B20) plus petite par rapport à l'ouverture supérieure (20a) et l'ouverture inférieure (20b) opposée, la bande élastique (30) réalisée sous la forme d'au moins une poche (30a, 30b, 30c) formant les plusieurs poches (30a, 30b, 30c) par le biais des autres coutures verticales (VN2).
